# EUROPÄISCHE PATENTANMELDUNG

(11) **EP 4 480 747 A1**
(43) Veröffentlichungstag der Anmeldung: **25.12.2024**
(21) Anmeldenummer: 24177219.3
(22) Anmeldetag: 22.05.2024
(51) Int. Cl.: B60N 2/02, B60N 2/06, B60N 2/20, B60N 2/90, B60N 3/06, B60N 2/16, B60N 2/22

(54) **FAHRZEUGSITZ, KRAFTFAHRZEUG UND VERFAHREN ZUM BETREIBEN DES FAHRZEUGSITZES**

(30) Priorität: 22.06.2023 DE 102023205855
(71) Anmelder: VOLKSWAGEN AG, 38440 Wolfsburg (DE)
(72) Erfinder: Bost, Bettina, 38173 Sickte (DE); Stahl, Arne, 38518 Gifhorn (DE)

(57) **Zusammenfassung**

Die Anmeldung betrifft einen Fahrzeugsitz (20) für einen Insassen (16) eines Kraftfahrzeugs (10), ein den Fahrzeugsitz (20) umfassendes Kraftfahrzeug (10) und Verfahren zum Betreiben des Fahrzeugsitzes (20).

Es ist vorgesehen, dass die Rückenlehne (24) des Fahrzeugsitzes (20) auf der Rückseite (24b) einen Auflagebereich (26) umfasst, der in einem mit der Vorderseite (24a) der Rückenlehne (24) zu dem Sitzpolster (22) geschwenkten Zustand zum Ablegen von Gegenständen und/oder Gliedmaßen ausgebildet ist. In dem geschwenkten Zustand bildet eine Pneumatik-Vorrichtung (28) eine pneumatisch betriebene Erhöhung (30) zur seitlichen Unterstützung des Auflagebereichs (26) aus, um auf dem Auflagebereich (26) abgelegte Gegenstände und/oder Gliedmaßen am Verlassen des Auflagebereichs (26) zu hindern.

## Beschreibung

Die Erfindung betrifft einen Fahrzeugsitz für einen Insassen eines Kraftfahrzeugs, ein den Fahrzeugsitz umfassendes Kraftfahrzeug und ein Verfahren zum Betreiben des Fahrzeugsitzes.

Längere Fahrten mit einem Kraftfahrzeug werden von den Insassen häufig als ermüdend empfunden. Die sitzende Körperhaltung und die eingeschränkte Bewegungsfreiheit können belastend sein und zu Muskelverspannungen, Gelenkschmerzen und dergleichen führen. Davon betroffen sind häufig vor allem die Füße und Beine der Insassen.

Um insbesondere lange Fahrten mit dem Kraftfahrzeug komfortabler und weniger belastend zu gestalten, werden verschiedene Massagesysteme in die Fahrzeugsitze von modernen Kraftfahrzeugen verbaut.

Dokument DE 10 2007 041 504 B4 betrifft einen Personenkraftwagen mit einem Beifahrersitz, dessen Rückenlehne über die senkrechte Position hinaus auf das Sitzpolster des Beifahrersitzes verstellbar und arretierbar ist. Auf der Rückseite der Rückenlehne ist im unteren Bereich eine Massageeinrichtung für die Füße eines hinter dem Beifahrersitz untergebrachten Insassen angeordnet. Der hintere Insasse kann folglich seine Füße auf den umgeklappten Beifahrersitz ablegen und durch die dort angeordnete Massageeinrichtung massieren lassen.

Dokument DE 11 2013 003 592 B4 beschreibt ebenfalls einen Fahrzeugsitz mit einem Fußmassagesystem. Anstatt die Rückenlehne des Fahrzeugsitzes umzuklappen, wird das Fußmassagesystem von der Rückseite der Rückenlehne zur Aufnahme der Füße des dahinter sitzenden Insassen aufgeklappt. Dies hat den Vorteil, dass ein Insasse den Fahrzeugsitz weiterhin zum Sitzen nutzen kann.

Der Erfindung liegt nun die Aufgabe zugrunde, einen Fahrzeugsitz bereitzustellen, der die Fahrt mit einem Kraftfahrzeug noch komfortabler macht.

Die erfindungsgemäße Aufgabe wird gelöst durch einen Fahrzeugsitz für einen Insassen eines Kraftfahrzeugs, ein den Fahrzeugsitz umfassendes Kraftfahrzeug und ein Verfahren zum Betreiben des Fahrzeugsitzes gemäß den unabhängigen Ansprüchen. Bevorzugte Weiterbildungen sind Gegenstand der jeweils rückbezogenen Unteransprüche.

Ein erster Aspekt betrifft einen Fahrzeugsitz für einen Insassen eines Kraftfahrzeugs. Der Fahrzeugsitz umfasst ein Sitzpolster, eine Rückenlehne und eine Pneumatik-Vorrichtung. Die Rückenlehne ist zum Sitzpolster des Fahrzeugsitzes (reversibel) schwenkbar ausgebildet. Die Rückenlehne umfasst fermer einen Auflagebereich auf der Rückseite. Der Auflagebereich ist in einem mit der Vorderseite der Rückenlehne zu dem Sitzpolster geschwenkten Zustand zum Ablegen von Gegenständen und/oder Gliedmaßen ausgebildet. Mit anderen Worten ist der Fahrzeugsitz aus der gewöhnlich verwendeten Sitzeinstellung, beispielsweise einer im Wesentlichen rechtwinkligen Anordnung von dem Sitzpolster zur Rückenlehne, zusammenklappbar, um in diesem Zustand mit der Rückseite der Rückenlehne als Ablagefläche zu dienen. Als Gegenstände können beispielsweise kleinere Objekte wie Zeitschriften, mobile Endgeräte, Schlüssel und dergleichen auf den Auflagebereich abgelegt werden. Hinsichtlich der Gliedmaßen dient der Auflagebereich insbesondere zum Ablegen von Füßen, Beinen und/oder Waden eines Insassen des Kraftfahrzeugs.

Damit die abgelegten Gegenstände und/oder Gliedmaßen nicht durch in Kurvenfahrten des Kraftfahrzeugs auftretende Kräfte aus dem Auflagebereich herausfallen, ist die Pneumatik-Vorrichtung auf der Rückseite der Rückenlehne angeordnet und dazu eingerichtet, eine pneumatisch betreibbare Erhöhung zur seitlichen Unterstützung des Auflagebereichs auszubilden. Die seitliche Unterstützung des Auflagebereichs kann links- und/oder rechtseitig zur Fahrtrichtung des Kraftfahrzeugs ausgebildet werden. Im Falle einer Kurvenfahrt werden die auf den Auflagebereich der Rückenlehne abgelegten Füße, Beine oder Waden des Insassen durch die ausgebildete seitliche Unterstützung in dem Auflagebereich gehalten, sodass die Fahrt mit dem Kraftfahrzeug für einen Insassen noch komfortabler gestaltet werden kann.

Die durch die Pneumatik-Vorrichtung bewirkte Erhöhung ist bevorzugt größer als 1 cm, besonders bevorzugt größer als 2 cm und/oder kleiner als 10 cm, besonders bevorzugt kleiner als 5 cm gegenüber einer Grundfläche des Auflagebereichs.

In bevorzugter Ausgestaltung ist vorgesehen, dass die Pneumatik-Vorrichtung ferner dazu eingerichtet ist, eine weitere pneumatisch betreibbare Erhöhung zur mittigen Unterstützung des Auflagebereichs auszubilden. Durch die mittige Unterstützung wird verhindert, das in dem Auflagebereich abgelegte Gegenstände und/oder Gliedmaßen in der Kurvenfahrt miteinander kollidieren. Anschaulich betrachtet verhindert die seitliche Unterstützung ein Herausfallen der beispielsweise abgelegten Beine, Waden oder Füße aus dem Auflagebereich während einer Kurvenfahrt. Allerdings würden die Beine, die Waden und/oder die Füße in diesem Fall aneinanderstoßen. Das Auftreten derartiger Stöße wird durch die mittige Unterstützung verhindert, sodass die Fahrt noch komfortabler gestaltet werden kann. Bevorzugt erstrecken sich die seitlichen und/oder mittleren Erhöhungen im Wesentlichen in Fahrtrichtung des Kraftfahrzeugs, um eine wirkungsvolle flächige Unterstützung der abgelegten Gliedmaßen zu ermöglichen.

In weiterer bevorzugter Ausgestaltung ist vorgesehen, dass die Pneumatik-Vorrichtung mindestens eine Pneumatik-Blasenkammer umfasst, die eine Konturierung zum pneumatisch betreibbaren Ausbilden einer Erhöhung zur seitlichen und/oder mittigen Unterstützung des Auflagebereichs umfasst. Die Pneumatik-Blasenkammer lässt sich durch den daran angelegten Druck auf- und abblasen. Durch den jeweils angelegten Druck kann ebenfalls ein Widerstand gegenüber abgelegten Gegenständen und/oder Gliedmaßen variabel eingestellt werden. Mit anderen Worten kann die Ausfahrposition der Pneumatik-Blasenkammer variabel eingestellt werden. Beispielsweise ist die Pneumatik-Blasenkammer hierzu mit einem Kompressor verbunden. Die Konturierung bewirkt, dass die Pneumatik-Blasenkammer ungleichmäßig expandiert, wenn diese mit Druckluft befüllt wird. Um die Konturierung zu erhalten, können Teile der Blasenkammer mit Stützstreben ausgestattet sein und/oder unterschiedliche Materialstärken und/oder -arten umfassen. Bevorzugt ist die durch die Konturierung bewirkte Erhöhung im pneumatischen Betrieb um mindestens 10 Prozent, besonders bevorzugt um mindestens 25 Prozent gegenüber einer Grundfläche erhöht ausgebildet. Eine Pneumatik-Blasenkammer ermöglicht es auf einfache Weise, gezielt verschiedene Ausfahrpositionen beziehungsweise Höhen über den jeweils angelegten Druck zu erreichen. Je nach eingestelltem Druck kann ein weicher bis hin zu einem eher festen Auflagebereich erreicht werden.

In weiterer bevorzugter Ausgestaltung ist vorgesehen, dass die Pneumatik-Vorrichtung mindestens ein Pneumatik-Blasenkammerpaar umfasst, wobei die Pneumatik-Blasenkammern des Pneumatik-Blasenkammerpaars jeweils eingerichtet sind, eine pneumatisch betreibbare Erhöhung zur seitlichen und/oder mittigen Unterstützung des Auflagebereichs auszubilden. Eine paarweise Verwendung von Blasenkammern ermöglicht es, den Auflagebereich zu partitionieren, um so individuelle Einstellmöglichkeiten über die Fläche des Auflagebereichs zu bieten. Beispielsweise kann je eine Blasenkammer des Blasenkammerpaares für jeweils einen abgelegten Fuß, eine abgelegte Wade oder ein abgelegtes Bein vorgesehen sein. In diesem Fall sind die Blasenkammern des Blasenkammerpaars in einem Abstand zueinander seitlich zur Fahrtrichtung des Kraftfahrzeugs angeordnet. In einer weiteren Ausgestaltung sind die Blasenkammern des Blasenkammerpaars in einem Abstand in Fahrtrichtung zueinander angeordnet. In diesem Fall können Höhenunterschiede entlang des Auflagebereichs durch unterschiedliche Ausfahrpositionen der Blasenkammern ausgeglichen oder zumindest verringert werden. Höhenunterschiede entlang des Auflagebereichs treten beispielsweise dadurch auf, dass sich Rückenlehnen im zum Sitzpolster geschwenkten Zustand üblicherweise einen Neigungswinkel ungleich null zwischen Sitzpolster und Rückenlehne und/oder zwischen Untergrund und Rückenlehne aufweisen. Ferner können unterschiedliche Sitzhaltungen oder - positionen des Insassen unterschiedliche als komfortabel wahrgenommene Höhenunterschiede entlang des Auflagebereichs erfordern, die durch die gezielte Steuerung der Ausfahrpositionen der Blasenkammern variabel erreichbar sind.

In weiterer bevorzugter Ausgestaltung ist vorgesehen, dass die Pneumatik-Vorrichtung eine Vielzahl von versetzt angeordneten Pneumatik-Blasenkammerpaaren umfasst. Beispielsweise sind die Pneumatik-Blasenkammerpaare jeweils parallel angeordnet. Durch die Vielzahl von Blasenkammerpaaren kann eine individuelle Höheneinstellung sowohl in Fahrtrichtung als auch seitlich zur Fahrtrichtung erreicht werden, wodurch der Auflagebereich noch komfortabler für den Insassen des Kraftfahrzeugs ausgestaltet wird.

Die Pneumatik-Vorrichtung ist bevorzugt ferner dazu eingerichtet, unterschiedliche Ausfahrpositionen des oder der Pneumatik-Blasenkammerpaare basierend auf einem Neigungswinkel und/oder einer Höheneinstellung der Rückenlehne einzustellen. Durch die Berücksichtigung des Neigungswinkels oder der Höheneinstellung der Rückenlehne bei der Ansteuerung der Ausfahrpositionen der Blasenkammern kann der Komfort weiter erhöht werden.

Ebenfalls bevorzugt ist die Pneumatik-Vorrichtung ferner dazu eingerichtet, die unterschiedlichen Ausfahrpositionen des oder der Pneumatik-Blasenkammerpaare basierend auf einer Längseinstellung des Fahrzeugsitzes einzustellen. Längseinstellung bedeutet entlang der Fahrtrichtung des Kraftfahrzeugs. Anhand der Längseinstellung des Fahrzeugsitzes lässt sich ermitteln, ob ein Bein beziehungsweise eine Wade oder eher ein Fuß auf dem Auflagebereich abgelegt ist, sodass jeweils unterschiedliche Ausfahrpositionen des oder der Blasenkammerpaare notwendig sind, um eine komfortable Ablage zu ermöglichen.

Zudem ist die Pneumatik-Vorrichtung bevorzugt dazu eingerichtet, die Ausfahrpositionen mindestens einer, einer Vielzahl von oder allen Pneumatik-Blasenkammern zyklisch zu wechseln. Durch das zyklische Ein- und Ausfahren der einen oder der Vielzahl von Pneumatik-Blasenkammern wird ein Massage-Effekt erzeugt. Mit anderen Worten ist die Pneumatik-Vorrichtung dazu eingerichtet, eine Massagefunktion durchzuführen, insbesondere unter Verwendung der Blasenkammern.

In weiterer bevorzugter Ausgestaltung ist vorgesehen, dass die Rückenlehne auf der Rückseite eine weiche Abdeckung umfasst, die die Pneumatik-Vorrichtung abdeckt. Durch die Abdeckung der Pneumatik-Vorrichtung wird diese geschützt und ist nicht für den Insassen sichtbar. Die Abdeckung bietet Komfort, auch wenn die Pneumatik-Vorrichtung abgeschaltet ist oder unter hohem Druck betrieben wird. Die weiche Abdeckung ist bevorzugt ein Schaum. Schäume sind flexibel und langlebig.

Bevorzugt umfasst die Rückenlehne einen Träger, an welchem die weiche Abdeckung befestigt ist. Die Pneumatik-Vorrichtung ist dann zwischen dem Träger und der weichen Abdeckung angeordnet. Der Träger verhindert, dass sich die Blasenkammer der Pneumatik-Vorrichtung (unnötig) in den Fahrzeugsitz hinein expandiert, sondern sich unter Druckzufuhr im Wesentlichen zur Rückseite des Fahrzeugsitzes ausdehnt. Hierdurch ist eine kompakte Anordnung der Pneumatik-Vorrichtung in der Rückenlehne möglich, ohne die Bauraumtiefe des Fahrzeugsitzes zu erhöhen. Bevorzugt umfasst die weiche Abdeckung Aussparungen zur Aufnahme der Blasenkammer/n der Pneumatik-Vorrichtung.

In weiterer bevorzugter Ausgestaltung ist vorgesehen, dass die Rückenlehne in dem mit der Vorderseite der Rückenlehne zu dem Sitzpolster geschwenkten Zustand auf dem Sitzpolster an- oder aufliegt. Durch An- oder Auflegen wird die Stabilität und somit die Tragkraft im geschwenkten Zustand erhöht und eine Materialermüdung verringert.

Ein weiterer Aspekt der Erfindung betrifft ein Kraftfahrzeug. Das Kraftfahrzeug umfasst mindestens einen Vordersitz und einen Rücksitz. Der Vordersitz ist als der oben beschriebene Fahrzeug ausgestaltet. Der Rücksitz ist derart angeordnet, dass der Auflagebereich der Rückenlehne des Vordersitzes in dem geschwenkten Zustand zur Aufnahme der Füße und/oder der Beine eines auf dem Rücksitz untergebrachten Insassen des Kraftfahrzeugs eingerichtet ist. Vordersitze sind für gewöhnlich Fahrer- und/oder Beifahrersitze. Ein Rücksitz ist ein Sitz in einer hinteren Reihe des Kraftfahrzeugs, besonders der zweiten Reihe auch Rückbank, Hintersitze oder Fondplätze genannt. Besonders vorteilhaft ist es, wenn der Beifahrersitz als der oben beschriebene Fahrzeugsitz ausgestaltet ist, da dieser auch während der Fahrt zur Ablage von Gliedmaßen eines Insassen auf dem Rücksitz genutzt werden kann. Ein als Fahrersitz genutzter Fahrzeugsitz gemäß der hierin beschriebenen Art könnte beispielsweise im Falle eines autonomen Fahrzeugbetriebs als Ablage verwendet werden. Die mit dem Fahrzeugsitz erzielten Vorteile können in analoger Weise mit dem Kraftfahrzeug erzielt werden. Die offenbarten Merkmalskombinationen des Fahrzeugsitzes sind analog auf das Kraftfahrzeug übertragbar. Auf eine wiederholende Beschreibung der Merkmale und Vorteile wird daher verzichtet.

In bevorzugter Ausgestaltung ist vorgesehen, dass der Vordersitz in seiner Längsstellung verstellbar ausgestaltet ist. Durch die verstellbare Längsverstellung kann der auf dem Rücksitz untergebrachte Insasse die Positionierung des Vordersitzes beziehungsweise des Auflagebereichs auf seine Größe und Sitzhaltung anpassen, um eine komfortable Sitzposition einzunehmen.

In weiterer bevorzugter Ausgestaltung ist vorgesehen, dass das Kraftfahrzeug ferner ein Bedienelement zum Bedienen der Pneumatik-Vorrichtung, der Längsstellung des Vordersitzes, einer Höhe der Rückenlehne des Vordersitzes und/oder eines Neigungswinkels der Rückenlehne umfasst. Das Bedienelement ist hierbei für den auf dem Rücksitz untergebrachten Insassen bedienbar angeordnet. Mit anderen Worten ist das Bedienelement in unmittelbaren Nähe zum Rücksitz angeordnet, um für den darauf untergebrachten Insassen zugänglich zu sein. Hierdurch kann der Insasse einfach eine komfortable Ablageposition seiner Füße, Beine oder Waden in dem Auflagebereich der Rückenlehne einstellen.

Ein weiterer Aspekt der Erfindung betrifft ein Verfahren zum Betreiben des hierin beschriebenen Fahrzeugsitzes für einen Insassen eines Kraftfahrzeugs. Das Kraftfahrzeug ist bevorzugt das oben beschriebene Kraftfahrzeug. Gemäß dem Verfahren wird die Pneumatik-Vorrichtung des Fahrzeugsitzes angesteuert, um eine pneumatisch betreibbare Erhöhung zur seitlichen Unterstützung des Auflagebereichs in dem mit der Vorderseite der Rückenlehne zu dem Sitzpolster geschwenkten Zustand auszubilden. Die mit dem Fahrzeugsitz erzielten Vorteile können in analoger Weise mit dem Verfahren erzielt werden. Die offenbarten Merkmalskombinationen des Fahrzeugsitzes sind analog auf das Verfahren übertragbar. Auf eine wiederholende Beschreibung der Merkmale und Vorteile wird daher verzichtet.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Kraftfahrzeugs mit einem Fahrersitz gemäß einer Ausführungsform in der Seitenansicht,
- Figur 2: eine schematische Querschnittdarstellung des Fahrersitzes gemäß Figur 1,
- Figur 3: eine schematische Darstellung des Kraftfahrzeugs mit einem Fahrersitz gemäß einer Ausführungsform in der Draufansicht,
- Figur 4: eine schematische Querschnittdarstellung des Fahrersitzes gemäß Figur 3,
- Figur 5: eine schematische Darstellung des Kraftfahrzeugs mit einem Fahrersitz gemäß einer Ausführungsform in der Draufansicht und
- Figur 6: eine schematische Querschnittdarstellung des Fahrersitzes gemäß Figur 5.

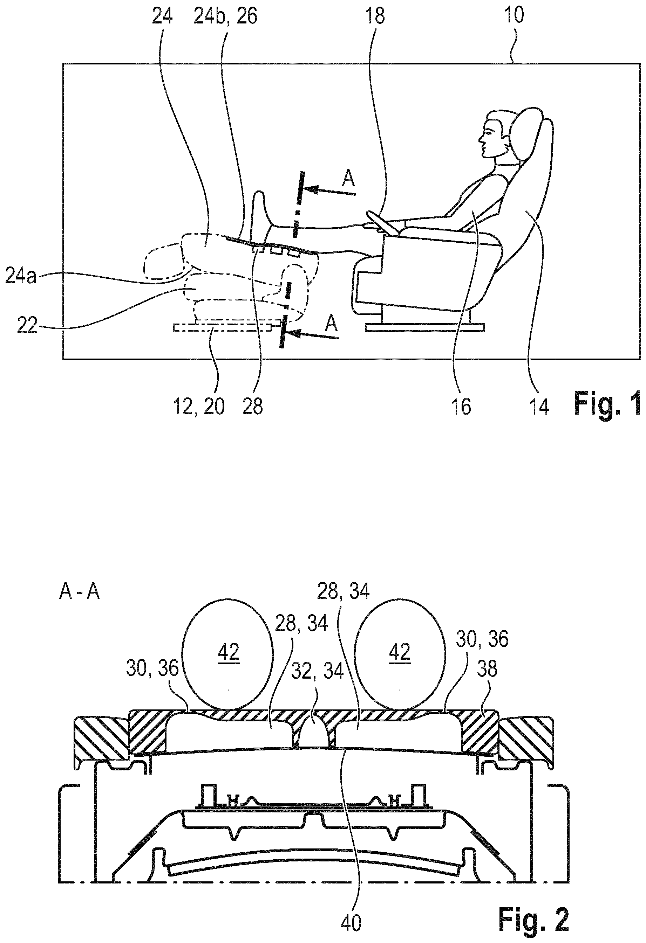

Figur 1 zeigt eine schematische Darstellung eines Kraftfahrzeugs 10 mit einem Fahrzeugsitz 20 gemäß einer Ausführungsform in der Seitenansicht. Das Kraftfahrzeug 10 umfasst mindestens einen Vordersitz 12 und einen Rücksitz 14. Der Vordersitz 12 ist als Fahrzeugsitz 20 ausgestaltet. Der Vordersitz 12 ist beispielsweise ein Beifahrersitz im Kraftfahrzeug 10 und der Rücksitz 14 ist ein Fondsitzplatz hinter dem Beifahrersitz des Kraftfahrzeugs 10.

Der Fahrzeugsitz 20 umfasst ein Sitzpolster 22 und eine Rückenlehne 24, die zum Sitzpolster 22 des Fahrzeugsitzes 20 schwenkbar ausgebildet ist. Die Rückenlehne 24 umfasst einen Auflagebereich 26 auf der Rückseite 24b, welcher in einem mit der Vorderseite 24a der Rückenlehne 24 zu dem Sitzpolster 22 geschwenkten Zustand zum Ablegen von Gegenständen und Gliedmaßen ausgebildet ist. In dem in Figur 1 gezeigten Beispiel des Fahrzeugsitzes 20 liegt die Vorderseite 24a der Rückenlehne 24 im Wesentlichen vollständig auf dem Sitzpolster 22 auf. In einer Sitzstellung ist die Rückenlehne 24 im Wesentlichen orthogonal zu dem Sitzpolster 22 geschwenkt.

Der Fahrzeugsitz 20 umfasst ferner eine Pneumatik-Vorrichtung 28, die auf der Rückseite 24b der Rückenlehne 24 in dem Auflagebereich 26 angeordnet ist. Der Rücksitz 14 des Kraftfahrzeugs 10 ist derart angeordnet, dass der Auflagebereich 26 der Rückenlehne 24 des Fahrzeugsitzes 20 in dem geschwenkten Zustand zur Aufnahme der Füße 44 und/oder der Beine 42 eines auf dem Rücksitz 14 untergebrachten Insassen 16 des Kraftfahrzeugs 10 eingerichtet ist. Wie in Figur 1 dargestellt wird, sind die Füße 44 und/oder Beine 42 des auf dem Rücksitz 14 untergebrachten Insassen 16 in dem Auflagebereich 26 und auf der darin angeordneten Pneumatik-Vorrichtung 28 abgelegt, um eine komfortable Sitzposition zu ermöglichen.

An dem Rücksitz 14 des Kraftfahrzeugs 10 ist ein Bedienelement 18 zum Bedienen der Pneumatik-Vorrichtung 28 durch den Insassen 16 angeordnet.

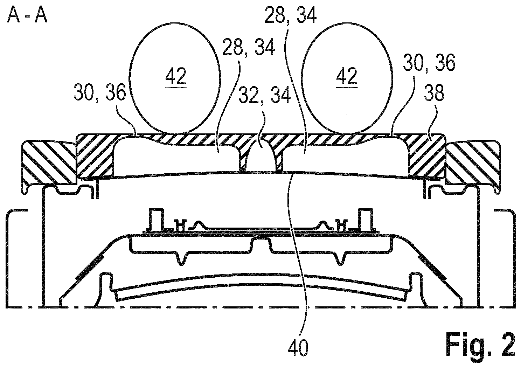

Im Hinblick auf Figur 2 werden der Fahrzeugsitz 20 und die Funktionalität der Pneumatik-Vorrichtung 28 näher erläutert. Figur 2 zeigt eine schematische Querschnittdarstellung des Fahrersitzes 20 entlang der A-A Schnittebene gemäß Figur 1. Die Pneumatik-Vorrichtung 28 ist dazu eingerichtet, eine pneumatisch betreibbare Erhöhung 30 zur seitlichen Unterstützung des Auflagebereichs 26 und eine weitere pneumatisch betreibbare Erhöhung 32 zur mittigen Unterstützung des Auflagebereichs 26 auszubilden. Hierzu umfasst die Pneumatik-Vorrichtung 28 mindestens ein Paar von Pneumatik-Blasenkammern 34 mit jeweils einer Konturierung 36 zum pneumatisch betreibbaren Ausbilden der Erhöhungen 30 zur seitlichen Unterstützung des Auflagebereichs 26. Die Pneumatik-Blasenkammern 34 lassen sich durch daran angelegte Druckluft auf- und abblasen. Durch den jeweils angelegten Druck der Druckluft werden die einzelnen Härtegrade beziehungsweise Widerstände der gefüllten Pneumatik-Blasenkammern 34 gegenüber abgelegten Gegenständen und/oder Gliedmaßen variabel eingestellt. Mit anderen Worten können die Ausfahrpositionen der Pneumatik-Blasenkammern 34 anhand des angelegten Druckes der Druckluft variabel eingestellt werden. Beispielsweise sind die Pneumatik-Blasenkammern 34 hierzu mit einem oder einer Vielzahl von Kompressoren verbunden. Beispielsweise werden die Kompressoren über das Bedienelement 18 angesteuert.

Zur Ausbildung der Konturierungen 36 der Pneumatik-Blasenkammern 34 des Blasenkammerpaares sind die Pneumatik-Blasenkammern 34 im Bereich der Konturierungen 36 mit Stützstreben ausgestattet und/oder umfassen dort unterschiedliche Materialstärken und/oder -arten. Die Konturierungen 36 bewirken, dass die Pneumatik-Blasenkammern 34 ungleichmäßig expandieren, wenn diese mit Druckluft befüllt werden. Unter Verwendung einer weiteren Pneumatik-Blasenkammer 34, die zwischen den Pneumatik-Blasenkammern 34 des Blasenkammerpaares angeordnet ist, bildet die Pneumatik-Vorrichtung 28 die weitere pneumatisch betreibbare Erhöhung 32 zur mittigen Unterstützung des Auflagebereichs 26 aus.

Die Erhöhungen 30, 32 erstrecken sich jeweils entlang einer Richtung parallel zur Fahrtrichtung des Kraftfahrzeugs 10. Somit werden die auf dem Auflagebereich 26 der Rückenlehne 24 abgelegten Füße 44, Beine 42 und/oder Waden des Insassen 16 während einer Kurvenfahrt möglichst flächig durch die Erhöhungen 30 der ausgebildeten seitlichen Unterstützungen in dem Auflagebereich 26 gehalten, sodass eine komfortable Fahrt mit dem Kraftfahrzeug 10 für den Insassen 16 möglich ist. Durch die weitere Erhöhung 32 zur mittigen Unterstützung des Auflagebereichs 26 wird verhindert, das in dem Auflagebereich abgelegte Füße 44, Beine 42 und/oder Waden des Insassen 16 während einer Kurvenfahrt miteinander kollidieren beziehungsweise aneinander anstoßen. Obgleich die Erhöhungen 30 und 32 anhand von drei Pneumatik-Blasenkammern 34 dargestellt sind, können diese Erhöhungen 30, 32 ebenfalls nur durch lediglich eine Pneumatik-Blasenkammer 34 mit jeweiligen Konturierungen 36 ausgebildet werden. Die durch die Pneumatik-Vorrichtung 28 bewirkten Erhöhungen 30, 32 sind im expandierten Zustand mindestens 2 cm erhöht gegenüber einer Grundfläche der expandierten Pneumatik-Blasenkammern 34 ohne Konturierungen 36. Figur 2 zeigt die Pneumatik-Blasenkammern 34 im (maximal) expandierten Zustand.

Die Rückenlehne 24 des Fahrzeugsitzes 20 umfasst auf der Rückseite 24b ferner eine weiche Abdeckung 38, die die Pneumatik-Vorrichtung 28 abdeckt. Weich ist hierbei derart zu verstehen, dass ein komfortables Ablegen der Waden, Beine 42 und/oder Füße 44 in dem Auflagebereich 26 für den Insassen 16 möglich ist. Durch die weiche Abdeckung 38 der Pneumatik-Vorrichtung 28 wird diese geschützt und für den Insassen 16 unsichtbar in der Rückenlehne 24 verstaut. Die weiche Abdeckung 38 bietet Komfort, auch wenn die Pneumatik-Vorrichtung 28 abgeschaltet ist oder unter hohem Druck betrieben wird. Die weiche Abdeckung 38 ist als ein Schaum ausgestaltet.

Zudem umfasst die Rückenlehne 24 des Fahrzeugsitzes 20 ferner einen Träger 40, an welchem die weiche Abdeckung 38 befestigt ist. Die Pneumatik-Vorrichtung 28, beziehungsweise die Pneumatik-Blasenkammern 34, sind zwischen dem Träger 40 und der weichen Abdeckung 38 angeordnet. Der Träger 40 verhindert, dass sich die Pneumatik-Blasenkammern 34 der Pneumatik-Vorrichtung 28 unnötig in den Fahrzeugsitz 20 hinein expandieren, sondern sich unter Druckzufuhr im Wesentlichen zur Rückseite 24b der Rückenlehne 24 des Fahrzeugsitzes 20 ausdehnen. Die weiche Abdeckung 38 umfasst hierzu Aussparungen (nicht dargestellt) zur Aufnahme der Pneumatik-Blasenkammern 34 der Pneumatik-Vorrichtung 28. Hierdurch ist eine kompakte Anordnung der Pneumatik-Vorrichtung 28 in der Rückenlehne 24 möglich, ohne die Bauraumtiefe des Fahrzeugsitzes 20 zu erhöhen.

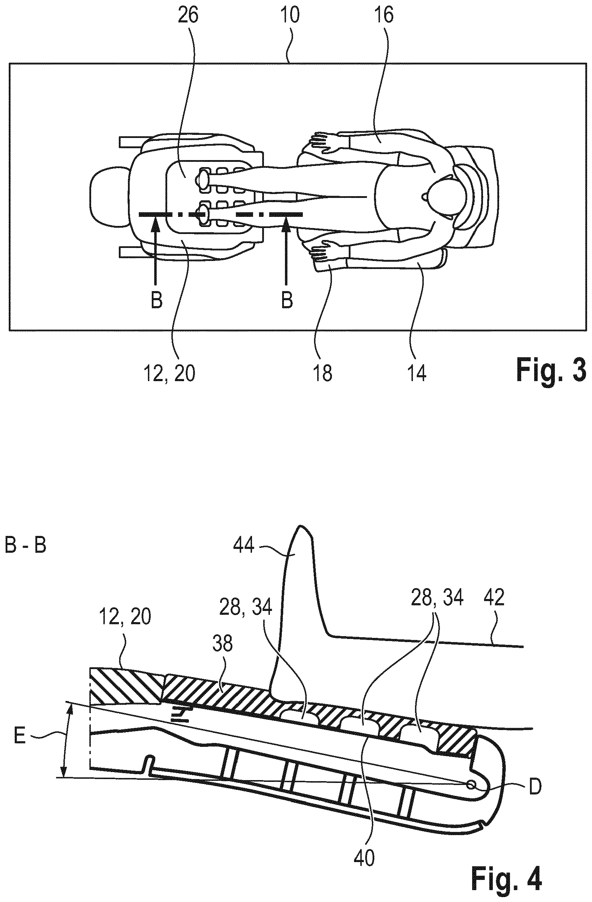

Anhand der Figuren 3 und 4 werden nachfolgend weitere Aspekte bezüglich einer variablen Höhen- und Winkeleinstellung erläutert. Figur 3 zeigt hierzu eine schematische Darstellung des Kraftfahrzeugs 10 mit einem Fahrersitz 20 gemäß einer Ausführungsform in der Draufansicht. Figur 4 zeigt eine schematische Querschnittdarstellung des Fahrersitzes 20 in der Seitenansicht entlang der B-B Schnittebene gemäß Figur 3. Der Fahrzeugsitz 20 wird im Wesentlichen analog zu dem in Figur 1 beschriebenen Fahrzeugsitz 20 ausgestaltet, sodass im Nachfolgenden lediglich auf die Unterschiede zwischen den Ausführungsformen eingegangen wird. Auf eine erneute Beschreibung der wiederkehrenden Merkmale wird insofern verzichtet.

In der in Figur 4 gezeigten Seitenansicht des Fahrersitzes 20 wird deutlich, dass die Pneumatik-Vorrichtung 28 eine Vielzahl von versetzt angeordneten Pneumatik-Blasenkammerpaaren umfasst, beispielsweise drei versetzt angeordnete Pneumatik-Blasenkammerpaare. Die Pneumatik-Blasenkammerpaare sind hierbei parallel zueinander in der Fahrtrichtung des Kraftfahrzeugs 10 versetzt angeordnet. Obwohl in der Draufsicht gemäß Figur 3 Blasenkammerpaare ohne mittig dazwischen angeordneter Pneumatik-Blasenkammern 34 zur Ausbildung der weiteren Erhöhungen 32 zur mittigen Unterstützung des Auflagebereichs 26 dargestellt ist, ist es verständlich, dass die Erfindung nicht darauf beschränkt ist. Vielmehr können ferner auch mittig zwischen den jeweiligen Pneumatik-Blasenkammern 34 der Blasenkammerpaare angeordnete Pneumatik-Blasenkammern 34 zur Ausbildung der weiteren Erhöhungen 32 zur mittigen Unterstützung des Auflagebereichs 26 vorgesehen sein.

Figur 4 zeigt ferner eine Schwenkachse D, um welche die Rückenlehne 24 zu dem Sitzpolster 22 schwenkbar ausgebildet ist. Mit anderen Worten ist die Schwenkachse D ferner eine Drehachse der Rückenlehne 24. Die Schwenkachse D ist bevorzugt im Wesentlichen in der Struktur der Rückenlehne 24 integriert, sodass die gesamte Rückenlehne 24 zusammen mit der weichen Abdeckung 38, beispielsweise dem Schaum, und gegebenenfalls eines über die Rückenlehne 24 gezogenen (Schutz-)Bezugs um die Schwenkachse D drehbar ausgestaltet ist. Bevorzugt ist die Neigung der Rückenlehne 24 um die Schwenkachse D einstellbar, beispielswiese, wenn die Rückenlehne 24 in vertikaler Stellung steht. Der Winkel zwischen der Rückenlehne 24 und dem Untergrund des Kraftfahrzeugs 10 ist der Neigungswinkel E. In dem mit der Vorderseite 24a der Rückenlehne 24 zu dem Sitzpolster 22 geschwenkten Zustand liegt die Rückenlehne 24 auf dem Sitzpolster 22 auf. Allerdings verbleibt hierbei häufig ein Neigungswinkel E ungleich null, der ein Ablegen der Waden, Beine 42 und/oder Füße 44 in dem Auflagebereich 26 für den Insassen 16 unkomfortabel erscheinen lässt. Daher ist die Pneumatik-Vorrichtung 28 ferner dazu eingerichtet, unterschiedliche Ausfahrpositionen der Pneumatik-Blasenkammern 34 der Pneumatik-Blasenkammerpaare basierend auf dem Neigungswinkel E und/oder einer Höheneinstellung der Rückenlehne 24 einzustellen. In Figur 4 wird beispielhaft eine treppenstufenartige Ausbildung der Ausfahrpositionen der Pneumatik-Blasenkammern 34 der Pneumatik-Blasenkammerpaare dargestellt, durch die der durch den Neigungswinkel E auftretende Effekt abgeschwächt und/oder ausgeglichen wird, sodass der Komfort für den Insassen 16 erhöht wird. In diesem Beispiel ist das Bedienelement 18 neben der Bedienung der individuellen Ausfahrpositionen der Pneumatik-Blasenkammern 34 (der Pneumatik-Blasenkammerpaare) ferner zum Bedienen der Höhenstellung und des Neigungswinkels E der Rückenlehne 24 des Fahrzeugsitzes 20 eingerichtet.

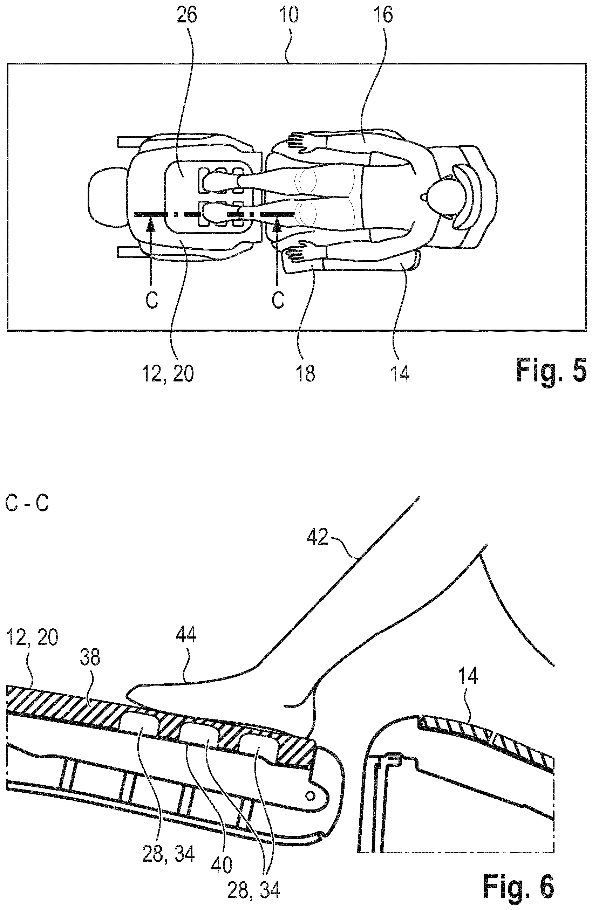

Anhand der Figuren 5 und 6 wird nachfolgend ein weiterer Aspekt hinsichtlich unterschiedlicher Sitzhaltungen und -positionen des Insassen 16 erläutert Figur 5 zeigt eine schematische Darstellung des Kraftfahrzeugs 20 mit einem Fahrersitz 20 gemäß einer Ausführungsform in der Draufansicht und Figur 6 zeigt eine schematische Querschnittdarstellung des Fahrersitzes 20 gemäß Figur 5 in der Seitenansicht entlang der C-C Schnittebene. Erneut ist der Fahrzeugsitz 20 gemäß Figur 5 im Wesentlichen analog zu den in Figur 1 oder Figur 3 beschriebenen Fahrzeugsitzen 20 ausgestaltet, sodass im Nachfolgenden lediglich auf die Unterschiede eingegangen wird. Auf eine erneute Beschreibung der wiederkehrenden Merkmale wird insofern verzichtet.

In den Figuren 5 und 6 wird ersichtlich, dass ferner unterschiedliche Sitzhaltungen und Sitzpositionen des Insassen 16 unterschiedliche Einstellungen des Fahrzeugsitzes 20, insbesondere der Pneumatik-Vorrichtung 28, erfordern, um eine komfortable Fahrt zu gewährleisten. Dies ist durch die gezielte Ansteuerung der Ausfahrpositionen der Pneumatik-Blasenkammern 34 variabel erreichbar. Hierzu ist der Fahrzeugsitz 20 in seiner Position entlang der Längsrichtung, das heißt entlang der Fahrtrichtung, variabel verstellbar. Unter der Annahme, dass der Insasse 16 die Sohlen seiner Füße 44 in dem Auflagebereich 26 ablegen möchte, bedient der Insasse 16 das Bedienelement 18 derart, dass sich ein Abstand in Längsrichtung zwischen dem Fahrzeugsitz 20 und dem Rücksitz 14 soweit verringert, dass sich die Sohlen der Füße 44 in einer angewinkelten Beinstellung im Wesentlichen vollständig in den Auflagebereich 26 ablegen lassen. In diesem Beispiel würde die in Figur 4 gezeigte treppenstufenartige Ausbildung der Ausfahrpositionen der Pneumatik-Blasenkammerpaare zu einer unnatürlicheren und damit unkomfortableren Fußstellung des Insassen 16 führen. Demgemäß ist die Pneumatik-Vorrichtung 28 dazu eingerichtet, in diesem gezeigten Beispiel der reduzierten Abstände entlang der Längsrichtung zwischen Fahrzeugsitz 20 und Rücksitz 14 die Ausfahrpositionen der Blasenkammerpaare auf gleicher Höhe oder in einer zu der in Figur 4 dargestellten entgegengesetzten Treppenstufenform auszubilden.

Ferner ist ein Verfahren (nicht dargestellt) zum Betreiben des hierin beschriebenen Fahrzeugsitzes 20 für den Insassen 16 des Kraftfahrzeugs 10 vorgesehen. Gemäß dem Verfahren wird die Pneumatik-Vorrichtung 28 des Fahrzeugsitzes 20 angesteuert, eine pneumatisch betreibbare Erhöhung 30 zur seitlichen Unterstützung des Auflagebereichs 26 und eine pneumatisch betreibbare Erhöhung 32 zur mittigen Unterstützung des Auflagebereichs 26 in dem mit der Vorderseite 24a der Rückenlehne 24 zu dem Sitzpolster 22 geschwenkten Zustand auszubilden.

### Bezugszeichenliste

- 10: Kraftfahrzeug
- 12: Vordersitz
- 14: Rücksitz
- 16: Insasse
- 18: Bedienelement
- 20: Fahrzeugsitz
- 22: Sitzpolster
- 24: Rückenlehne
- 24a: Vorderseite
- 24b: Rückseite
- 26: Auflagebereich
- 28: Pneumatik-Vorrichtung
- 30: Erhöhung zur seitlichen Unterstützung
- 32: Erhöhung zur mittigen Unterstützung
- 34: Pneumatik-Blasenkammer
- 36: Konturierung
- 38: weiche Abdeckung
- 40: Träger
- 42: Bein
- 44: Fuß

- A-A: Schnittebene
- B-B: Schnittebene
- C-C: Schnittebene

- D: Schwenkachse
- E: Neigungswinkel

## Patentansprüche

1. Fahrzeugsitz (20) für einen Insassen (16) eines Kraftfahrzeugs (10), umfassend:
ein Sitzpolster (22),
eine Rückenlehne (24), die zum Sitzpolster (22) des Fahrzeugsitzes (20) schwenkbar ausgebildet ist und einen Auflagebereich (26) auf der Rückseite (24b) umfasst, wobei der Auflagebereich (26) in einem mit der Vorderseite (24a) der Rückenlehne (24) zu dem Sitzpolster (22) geschwenkten Zustand zum Ablegen von Gegenständen und/oder Gliedmaßen ausgebildet ist, und
eine Pneumatik-Vorrichtung (28), die auf der Rückseite (24b) der Rückenlehne (24) angeordnet ist,
**dadurch gekennzeichnet, dass**
die Pneumatik-Vorrichtung (28) dazu eingerichtet ist, eine pneumatisch betreibbare Erhöhung (30) zur seitlichen Unterstützung des Auflagebereichs (26) auszubilden.

2. Fahrzeugsitz (20) nach Anspruch 1,
**dadurch gekennzeichnet, dass**
die Pneumatik-Vorrichtung (28) ferner dazu eingerichtet ist, eine weitere pneumatisch betreibbare Erhöhung (32) zur mittigen Unterstützung des Auflagebereichs (26) auszubilden.

3. Fahrzeugsitz (20) nach einem der vorangehenden Ansprüche,
**dadurch gekennzeichnet, dass**
die Pneumatik-Vorrichtung (28) mindestens eine Pneumatik-Blasenkammer (34) umfasst, die eine Konturierung (36) zum pneumatisch betreibbaren Ausbilden einer Erhöhung (30, 32) zur seitlichen und/oder mittigen Unterstützung des Auflagebereichs (26) umfasst.

4. Fahrzeugsitz (20) nach einem der vorangehenden Ansprüche,
**dadurch gekennzeichnet, dass**
die Pneumatik-Vorrichtung (28) mindestens ein Pneumatik-Blasenkammerpaar umfasst, wobei die Pneumatik-Blasenkammern (34) des Pneumatik-Blasenkammerpaars jeweils eingerichtet sind, eine pneumatisch betreibbare Erhöhung (30) zur seitlichen und/oder mittigen Unterstützung des Auflagebereichs (26) auszubilden.

5. Fahrzeugsitz (20) nach einem der vorangehenden Ansprüche,
**dadurch gekennzeichnet, dass**
die Pneumatik-Vorrichtung (28) eine Vielzahl von versetzt angeordneten Pneumatik-Blasenkammerpaaren umfasst.

6. Fahrzeugsitz (20) nach Anspruch 4 oder 5,
**dadurch gekennzeichnet, dass**
die Pneumatik-Vorrichtung (28) dazu eingerichtet ist, unterschiedliche Ausfahrpositionen des oder der Pneumatik-Blasenkammerpaare basierend auf einem Neigungswinkel (E) und/oder einer Höheneinstellung der Rückenlehne (24) einzustellen.

7. Fahrzeugsitz (20) nach Anspruch 6,
**dadurch gekennzeichnet, dass**
die Pneumatik-Vorrichtung (28) ferner dazu eingerichtet ist, die unterschiedlichen Ausfahrpositionen des oder der Pneumatik-Blasenkammerpaare basierend auf einer Längseinstellung des Fahrzeugsitzes (20) einzustellen.

8. Fahrzeugsitz (20) nach einem der Ansprüche 3 bis 7,
**dadurch gekennzeichnet, dass**
die Pneumatik-Vorrichtung (28) dazu eingerichtet ist, die Ausfahrpositionen mindestens einer Pneumatik-Blasenkammer (34) zyklisch zu wechseln.

9. Fahrzeugsitz (20) nach einem der vorangehenden Ansprüche,
**dadurch gekennzeichnet, dass**
die Rückenlehne (24) auf der Rückseite (24b) eine weiche Abdeckung (38) umfasst, die die Pneumatik-Vorrichtung (28) abdeckt.

10. Fahrzeugsitz (20) nach Anspruch 9,
**dadurch gekennzeichnet, dass**
die Rückenlehne (24) einen Träger (40) umfasst, an welchem die weiche Abdeckung (38) befestigt ist, wobei die Pneumatik-Vorrichtung (28) zwischen dem Träger (40) und der weichen Abdeckung (38) angeordnet ist.

11. Fahrzeugsitz (20) nach einem der vorangehenden Ansprüche,
**dadurch gekennzeichnet, dass**
die Rückenlehne (24) in dem mit der Vorderseite (24a) der Rückenlehne (24) zu dem Sitzpolster (22) geschwenkten Zustand auf dem Sitzpolster (22) an- oder aufliegt.

12. Kraftfahrzeug (10), umfassend mindestens einen Vordersitz (12) und einen Rücksitz (14),
**dadurch gekennzeichnet, dass**
der Vordersitz (12) als Fahrzeugsitz (20) nach einem der vorangehenden Ansprüche ausgestaltet ist und der Rücksitz (14) derart angeordnet ist, dass der Auflagebereich (26) der Rückenlehne (24) des Vordersitzes (12) in dem geschwenkten Zustand zur Aufnahme der Füße (44) und/oder der Beine (42) eines auf dem Rücksitz (14) untergebrachten Insassen (16) des Kraftfahrzeugs (10) eingerichtet ist.

13. Kraftfahrzeug (10) nach Anspruch 12,
**dadurch gekennzeichnet, dass**
der Vordersitz (12) in seiner Längsstellung verstellbar ausgestaltet ist.

14. Kraftfahrzeug (10) nach Anspruch 12 oder 13, ferner umfassend ein Bedienelement (18) zum Bedienen der Pneumatik-Vorrichtung (28), der Längsstellung des Vordersitzes (12), einer Höhe der Rückenlehne (24) des Vordersitzes (12) und/oder eines Neigungswinkels (E) der Rückenlehne (24), wobei das Bedienelement (18) für den auf dem Rücksitz (14) untergebrachten Insassen (16) bedienbar angeordnet ist.

15. Verfahren zum Betreiben eines Fahrzeugsitzes (20) für einen Insassen (16) eines Kraftfahrzeugs (10) nach einem der Ansprüche 1 bis 11,
**dadurch gekennzeichnet, dass**
die Pneumatik-Vorrichtung (28) angesteuert wird, eine pneumatisch betreibbare Erhöhung (30) zur seitlichen Unterstützung des Auflagebereichs (26) in dem mit der Vorderseite (24a) der Rückenlehne (24) zu dem Sitzpolster (22) geschwenkten Zustand auszubilden.
